# EUROPEAN PATENT APPLICATION

(11) **EP 3 375 300 A1**
(43) Date of publication of application: **19.09.2018**
(21) Application number: 16864232.0
(22) Date of filing: 09.11.2016
(51) Int. Cl.: A23L 29/00, A21D 2/18, A21D 2/26, A23G 3/00, A23G 3/34, A23L 2/00, A23L 2/38, A23L 15/00, A23L 31/15

(54) **FOAMING MEMBER**

(30) Priority: 13.11.2015 JP 2015223401
(71) Applicant: KOHJIN Life Sciences Co., Ltd., Tokyo 100-0006 (JP)
(72) Inventor: NAKAO, Eiji, Saiki-shi Oita 876-8580 (JP); ASON, Kenichi, Saiki-shi Oita 876-8580 (JP); KAJI, Naoto, Saiki-shi Oita 876-8580 (JP)
(74) Representative: Müller-Boré & Partner Patentanwälte PartG mbB
(86) International application number: PCT/JP2016/083171
(87) International publication number: WO 2017/082271

(57) **Abstract**

[Problem]

To manufacture a foaming member using a low-cost method having little environmental impact, in which the air bubbles in an air-bubble-containing product are enhanced and stability is improved, without imparting viscosity, coloring, flavor, cloudiness, odor, etc. Also, to provide an effective use of yeast cell residue generated as a byproduct of a yeast extract.

[Solution]

A yeast cell residue remaining after a useful extract is removed from a yeast is suspended in water, and is heated after pH adjustment, and then a supernatant is obtained by centrifugal separation. This fraction contains, in relation to the solid content, 35 wt% or more of protein and 30 wt% or more of dietary fiber, and is usable in the foaming member.

## Description

### Technical Field

The present invention relates to a foaming material obtained from a yeast cell residue.

### Background Art

The quality of bubble-containing products is greatly affected by the difference in bubble state. For example, in bubble-containing confectionery, the bubbles impart fluffy mouthfeel and smooth touch in the mouth as meringue in which fine air is contained in the egg white is used. Hence, bubbling of meringue and stability of bubbles are important factors when making meringue-using food products. In addition, in beer-based beverages, which are bubble-containing beverages, bubbling after pouring, fine texture of foam, and stability of foam are important.

However, bubbles in bubble-containing products such as bubbles contained in meringue and bubbles generated in beer-based beverages are generally unstable and disappear with time, and there is thus a problem that the quality of the products deteriorates.

As a method for improving bubbling and stability of bubbles, a method in which a thickening polysaccharide is added (Patent Literature 1, Patent Literature 2, Patent Literature 3, and Patent Literature 4), a method in which a black tea extract is added (Patent Literature 5), a method in which a soluble fraction derived from a yeast cell wall is added (Patent Literature 6), a method in which a whey protein and a thickening polysaccharide are added (Patent Literature 7), and the like have been reported.

However, there have been problems in these methods that foaming property is insufficient, stability of generated bubbles is insufficient, and viscosity, color, taste, turbidity, odor, and the like are imparted to the bubble-containing products.

Meanwhile, yeast contains components such as nucleic acids, amino acids, and peptides, and the extract thereof is used as a raw material for glutathione, which is a pharmaceutical product, and as a yeast extract, which is a natural seasoning, but a large amount of yeast cell residues is obtained as a by-product at the time of extraction and the effective utilization thereof has been a problem.

As a method for producing yeast extract, various methods are known depending on the enzyme to be extracted, the medium, and the like (Patent Literature 8).

The cell residues obtained after the yeast extract and the like are extracted from yeast contain glucans, mannan, mannoproteins, proteins, lipids, and nucleic acids as main components.

There are a plurality of known Literatures on the methods for treating and effectively utilizing such yeast cell residues. For example, Patent Literature 9 discloses a method in which yeast extract residues are solubilized with a specific enzyme and subjected to wastewater treatment. Patent Literature 10 discloses a method in which yeast extract residues are utilized by microorganisms to produce mannose, Patent Literature 11 discloses a method in which yeast extract residues are treated with an alkali and then washed to obtain a pharmacological composition, and Patent Literature 12 discloses a method in which cell wall lytic enzymes and the like are allowed to act on a yeast extract residues to obtain microbial culture substrates.

Under such circumstances, a more effective method for utilizing yeast cell residues has been desired.

### Citation List

### Patent Literature

Patent Literature 1: JP 10-165082 A
Patent Literature 2: JP 2008-000061 A
Patent Literature 3: JP 2004-357643 A
Patent Literature 4: JP 2011-155935 A
Patent Literature 5: JP 2003-304844 A
Patent Literature 6: JP 2008-271820 A
Patent Literature 7: JP 2004-105179 A
Patent Literature 8: JP 5-252894 A, JP 6-113789 A, and JP 9-056361 A
Patent Literature 9: JP 7-184640 A
Patent Literature 10: JP 10-057091 A
Patent Literature 11: JP 2001-055338 A
Patent Literature 12: JP 2007-006838 A

### Non Patent Literature

Non Patent Literature 1: Chemistry and Organisms 28, 736, 1990

### Summary of Invention

### Technical Problem

An object to be achieved is to provide a foaming material which promotes foaming of a bubble-containing product and improves the stability of bubbles, and it is desirable not to impart viscosity, color, taste, turbidity, odor, and the like to the product at that time. It is desirable to use those that can be produced by a method which requires low cost and causes decreased environmental impact.

In addition, another object is the effective utilization of yeast cell residues to be generated as a by-product of yeast extract.

As a result of intensive studies to achieve the above objects, the present inventors have found out that the extract from yeast cell residues exhibit high foaming property. It is possible to enhance the foaming property and to improve the stability of bubbles by adding this extract to a bubble-containing product.

In other words, the present invention provides:
(1) A foaming material including a yeast extract having a protein content of 35% by weight or more per solid content and a dietary fiber content of 30% by weight or more per solid content;
(2) A foaming agent including the foaming material according to the above (1);
(3) A bubble-containing food product including the foaming material according to the above (1) at from 0.001% to 1% by weight;
(4) A method for producing the foaming material according to the above (1), wherein a yeast extract is extracted from a yeast cell residue;
(5) A method for producing the foaming material according to the above (1), the method including: a step of suspending a yeast cell residue in water; a step of adjusting a pH of a yeast cell suspension to an acidic side; and a step of heating a yeast cell suspension; and
(6) A method for promoting foaming or stabilizing bubbles of a composition to be foamed, wherein the foaming material according to the above (1) is contained in the composition at from 0.001% to 1% by weight.

### Advantageous Effects of Invention

According to the present invention, a yeast extract exhibiting foaming property and a foam stabilizing effect is obtained from edible yeast which have been eaten and confirmed to be safe, for example, Candida utilis.

This yeast extract can be used as a foaming material since it enhances the foaming property and further improves the stability of the bubbles generated by being added to a bubble-containing product in a small amount before and during the generation of bubbles. The foaming material containing the yeast extract of the present invention can improve the quality of a bubble -containing product by promoting foaming and improving the stability of bubbles. In addition, this foaming material does not exhibit taste offering property and does not impart viscosity, off-taste, off-odor, and color to a bubble-containing food product to which the foaming material is added.

The foaming material of the present invention is a natural product since it is produced using yeast as a raw material, but it has a lower risk of unstable supply, price fluctuation, and quality fluctuation as compared to a case of using animals and vegetables as a raw material.

The foaming material of the present invention can use a cell residue after extraction of the yeast extract and the like as a raw material and can be obtained from the cell residue through a simple step. The cell residue of Candida utilis is produced in a large amount as a by-product along with the production of yeast extract, which is a seasoning, and other useful components, and the present invention is extremely advantageous from the viewpoint of cost and waste decrease as well since the yeast cell residue can be effectively utilized.

### Description of Embodiments

Hereinafter, the present invention will be specifically described.

The yeast referred to in the present invention is yeast which can be used for the production of food products, and any one can be used as long as it is yeast to be used for the production of food products . Specific examples thereof may include Candida utilis and Saccharomyces cerevisiae, and among these, Candida utilis is preferable.

The yeast cell residue of the present invention is a yeast cell residue after extraction of yeast extract and the like. In the present invention, the extraction method of yeast extract is not particularly limited. The yeast cells become a residue after the yeast extract or useful components are removed from yeast cells by being subjected to an extraction treatment using any one or more of hot water, an acid · alkaline solution, an autolysis reaction, mechanical crushing, a cell wall lytic enzyme, a proteolytic enzyme, ribonuclease, or deaminase. Examples thereof may include "KR yeast" manufactured by KOHJIN Life Sciences Co., Ltd.

Generally, such a yeast cell residue contains glucans, mannan, proteins, lipids, and nucleic acids as main components, but it is presumed that glucans, mannan, proteins, and other components are firmly bonded to one another as a complex in terms of structure.

The yeast cell residue to be used for producing the foaming material of the present invention is not particularly limited, but from the viewpoint of foaming activity, it is more preferable to use a residue particularly after alkali extraction of yeast since the activity is high.

The foaming material of the present invention can be extracted from a yeast cell residue. A cell suspension having a concentration of about 10% by weight as a dry cell weight is prepared by adding water to the yeast cell residue described above. Incidentally, the suspension concentration is arbitrary.

The pH of the cell suspension is adjusted to an acidic side, desirably to a pH of 5 or lower and still more desirably apHof 3 or lower. After the pH of the cell suspension is adjusted, a heat treatment is conducted at from 100°C to 120°C for 60 minutes or longer and desirably at 110°C for 90 minutes. At this time, when the pH is on the alkaline side, the protein content in the yeast extract, which is the final product, does not reach 35% by weight or more and thus a composition exhibiting low foaming property and a low bubble stabilizing function is obtained.

The cell suspension is cooled after heating, and the pH thereof is adjusted to near the neutral region. This suspension is centrifuged to remove the precipitate therefrom, and a fraction containing proteins and dietary fibers is obtained as a supernatant. This fraction as it is or one obtained by concentrating and drying this fraction is a yeast extract exhibiting foaming property and a bubble stabilizing function and can be used as a foaming material. Incidentally, the concentrating method and the drying method can be arbitrarily selected.

The foaming material of the present invention exhibits a strong foaming effect when the protein content is 35% by weight or more and desirably 40% by weight or more per solid content in the yeast extract and the dietary fiber content is 30% by weight or more and desirably 35% by weight or more per solid content. On the other hand, it is desirable that the contents of inosinic acid, guanylic acid, and glutamic acid which are strong taste offering components are low.

In the present invention, a hydrolysis method was used for the measurement of protein content. To 0.1 g of the yeast extract (dried product) of a sample, 5 ml of 6 N hydrochloric acid was added, the yeast extract was dissolved and hydrolyzed at 110°C for 24 hours, then the whole amount of the resultant was transferred to a 25 ml volumetric flask, and the volume was made up to 25 ml with 0.02 N hydrochloric acid. The solution thus prepared was taken by 2 g and concentrated by using a concentrator. After the concentration, 2 ml of 0.02 N hydrochloric acid was added thereto and the mixture was concentrated again. The concentrated sample was dissolve with 0.02 N hydrochloric acid and made up to 20 ml, and then the measurement was conducted by using a fully automated amino acid analyzer (L-8900 manufactured by Hitachi High-Technologies Corporation) to determine the protein content.

In the present invention, a hydrolysis method was used for the measurement of dietary fiber content. To the yeast extract of a sample, 1 N sulfuric acid was added, the yeast extract was hydrolyzed at 110°C for 3.5 hours, and the resultant was neutralized, then mannose and glucose, which are hydrolysis products, were measured by liquid chromatography and converted into glucan and mannan to determine the dietary fiber content. A RI detector was used for detection, SP 810 (Shodex) was used as a separation column, and ultrapure water was used as a mobile phase.

The yeast extract obtained using the yeast cell residue as a raw material by the production method described above can be used as a foaming material as it is. Alternatively, this foaming material may be formed into a foaming agent by being blended with other components, desirably naturally derived components, if necessary.

It is desirable that the foaming material of the present invention is used by being added to a composition to be foamed, for example, a bubble-containing food product at the time of generating bubbles in the state of a powder or a solution. The strength of the effect of the foaming material of the present invention varies depending on the components of the bubble-containingproduct. Hence, the desirable amount blended varies depending on the bubble-containing food product, but it is from 0.005 to 1.0% by weight and desirably from 0.01 to 0.5% by weight.

The bubble-containing food product of the present invention is a beverage such as a carbonated beverage, a fruit juice drink, a liquid seasoning such as a sauce, a soup, or a soy sauce, a foamed food product such as meringue or whipped cream, and it is food and drink products which form foam or food and drink products which retain the state of foam that has been formed.

Hereinafter, the present invention will be described in detail with reference to Examples.

### <Production Example 1>

The pH of 1000 ml of a cell suspension of Candida utilis CBS 6316 strain (FERM BP-1657 strain) at 10% by weight (dry cell weight) was adjusted to 3.5 with 10 N sulfuric acid and treated at 70°C for 30 minutes, and the cells were recovered by centrifugation and washed with water to remove sulfuric acid and excess extracts. The present cells were adjusted with water to have a cell concentration (dry cell weight) of 10% by weight, suspended, then adjusted to a pH of 9 by adding a solution of caustic soda thereto, and treated at 65°C for 60 minutes to extract the extract therefrom. The yeast cell residue after the extraction of extract was used as a raw material for the foaming material.

Water was added to the above yeast cell residue to prepare a cell suspension having a concentration of about 10% by weight, and the pH of the cell suspension was adjusted to 2.0 with hydrochloric acid. This yeast cell suspension was subjected to a heat treatment at 110°C for 90 minutes by using a highpressure steam sterilizer (manufactured by TOMY SEIKO CO., LTD.). A solution of caustic soda was added to this yeast cell suspension to adjust the pH to 6.0, the yeast cell suspension was centrifuged at 6000 rpm for 10 minutes by using a centrifugal separator to collect a soluble fraction, and this was concentrated and then lyophilized to obtain a powdered yeast extract.

The yeast extract thus obtained had a protein content of 41.6% by weight and a dietary fiber content of 36.5% by weight. This yeast extract was used as the foaming material of Production Example 1.

### <Production Example 2>

A yeast extract was obtained in the same manner as in Production Example 1 except that the cell suspension having a concentration of about 10% by weight was adjusted to a pH of 8.0 with a solution of caustic soda instead of being adjusted to a pH of 2.0 with hydrochloric acid in Production Example 1, and it was used as the yeast extract of Production Example 2.

### <Production Example 3, Production Example 4, and Production Example 5>

The yeast extracts of Production Example 3, Production Example 4, and Production Example 5, were respectively obtained in the same manner as in Production Example 1 except that the cell suspension having a concentration of about 10% by weight was adjusted to a pH of 9.0, 10.0, or 11.0 with a solution of caustic soda instead of being adjusted to a pH of 2.0 with hydrochloric acid in Production Example 1.

### (Foaming Activity Test 1)

### <Example 1>

The foaming material obtained in Production Example 1 was dissolved in water to prepare a solution at 0.1% by weight. The solution of the foaming material at 0.1% by weight thus prepared was weighed by 20 mL and put in a 50 mL colorimetric tube with stopper. The colorimetric tube with stopper containing the solution was vigorously stirred up and down for 30 seconds. After stirring, the total amount (ml) of the foam thus generated and the volume of water was measured and evaluated by the criteria that the foaming activity was higher as the total amount was larger.

### <Comparative Example 1>

Comparative Example 1 was carried out in the same manner as in Example 1 except that an equal amount of soybean saponin was used instead of the foaming material in Example 1.

### <Comparative Example 2>

Comparative Example 2 was carried out in the same manner as in Example 1 except that an equal amount of KIRAYANIN p-20 (MARUZEN PHARMACEUTICALS CO., LTD.) was used instead of the foaming material in Example 1.

As a result of the foaming activity test in Example 1, Comparative Example 1, and Comparative Example 2, the sum of foam and liquid amount was 50 ml in Example 1, 34.5 ml in Comparative Example 1, and 30 ml in Comparative Example 2. A higher foaming power was exhibited in Example 1 as compared to Comparative Example 1 and Comparative Example 2.

### (Foaming Activity Test 2)

### <Example 2>

An aqueous solution was prepared by dissolving the foaming material which was obtained in Production Example 1 and had a protein content of 41.6% by weight and a dietary fiber content of 36.5% by weight in water so that the concentration of dietary fiberwas0. 02%byweight. The solution thus prepared was weighed by 20 ml and put in a 50 ml colorimetric tube with stopper. The colorimetric tube with stopper containing the solution was vigorously stirred up and down for 30 seconds. After stirring, the total amount (ml) of the foam thus generated and the volume of water was measured and evaluated by the criteria that the foaming activity was higher as the total amount was larger.

### <Comparative Example 3>

Comparative Example 3 was carried out in the same manner as Example 2 except that an aqueous solution was prepared using a yeast extract (manufactured by KOHJIN Life Sciences Co., Ltd.) which exhibited foaming activity and had a protein content of 24.8% by weight and a dietary fiber content of 39.5% by weight instead of the foaming material obtained in Production Example so that the dietary fiber content was 0.02% by weight and used in Example 2.

### <Comparative Example 4>

Comparative Example 4 was carried out in the same manner as in Example 2 except that a foaming material was not added in Example 2.

As a result of the foaming activity test in Example 2, Comparative Example 3, and Comparative Example 4, the sum of foam and liquid amount was 39 ml in Example 2, 24 ml in Comparative Example 3, and 20 ml in Comparative Example 4. A higher foaming power was exhibited in Example 2 as compared to Comparative Example 3 and Comparative Example 4. It has been suggested that the foaming activity of the foaming material of the present invention is attributed to the synergistic effect of a protein and a dietary fiber.

### (Foaming Activity Test 3)

### <Example 3>

The foaming material obtained in Production Example 1 was dissolved in water to prepare a solution at 0.1% by weight. The solution of the foaming material at 0.1% by weight thus prepared was weighed by 20 mL and put in a 50 mL colorimetric tube with stopper. The colorimetric tube with stopper containing the solution was vigorously stirred up and down for 30 seconds. After stirring, the appearance and the total amount (ml) of the foam thus generated and the volume of water were measured.

### <Comparative Example 5, Comparative Example 6, Comparative Example 7, and Comparative Example 8>

Comparative Example 5, Comparative Example 6, Comparative Example 7, and Comparative Example 8 were carried out in the same manner as in Example 3 except that the yeast extract of Production Example 2, the yeast extract of Production Example 3, the yeast extract of Production Example 4, and the yeast extract of Production Example 5 were used instead of the foaming material of Production Example 1 in Example 3.

As a result of the foaming activity test in Example 3, Comparative Example 5, Comparative Example 6, Comparative Example 7, and Comparative Example 8, the sum of foam and liquid amount was 45 ml or more and thus the foaming activity was high in Example 3 but the sum of foam and liquid amount was around 26 ml and thus the foaming activity was low in all of Comparative Example 5, Comparative Example 6, Comparative Example 7, and Comparative Example 8. It is considered that this is because the protein content in the yeast extract to be obtained decreases to less than 35% by weight when the pH of the cell suspension is on an alkaline side at the time of heat treatment. In addition, turbidity was not observed in the solution of Example 3 but clear turbidity was observed in the solutions of Comparative Example 5, Comparative Example 6, Comparative Example 7, and Comparative Example 8.

### (Meringue Volume Increase Test)

### <Example 4>

Meringue was prepared by weighing 30 g of egg white, 10 g of water, 12 g of white sugar, and 0.052 g (0.1% by weight) of the foaming material obtained in Production Example 1 and mixing these for 3 minutes at the medium speed by using a hand mixer. The meringue thus obtained was weighed by 20 g and put in a beaker, and the volume of meringue was confirmed.

### <Example 5>

Example 5 was carried out in the same manner as in Example 4 except that the amount of the foaming material added was changed to 0.156 g (0.3% by weight) in Example 4.

### <Comparative Example 9>

Comparative Example 9 was carried out in the same manner as in Example 4 except that a foaming material was not added in Example 4.

As a result of evaluation in Example 4, Example 5, and Comparative Example 9, the meringue volume was about 150 ml in Example 4, about 175 ml in Example 5, about 125 ml in Comparative Example 9 and it has been thus indicated that the volume of meringue increases by the addition of a foaming material and the quantity of increase correlates to the amount of the foaming material added.

### (Bubble Stability Test of Whole Egg Meringue)

### <Example 6>

Whole egg meringue was prepared by weighing 40 g of whole egg, 0.456 g (0.48% by weight) of the foaming material of Production Example 1, 40 g of water, and 15 g of white superior soft sugar and whipping these for 3 minutes by using a hand mixer. The change of whole egg meringue was visually confirmed after the whole egg meringue thus obtained was left to stand for 1 hour at room temperature.

### <Comparative Example 10>

Comparative Example 10 was carried out in the same manner as in Example 6 except that a foaming material was not added in Example 6.

As a result of evaluation in Example 6 and Comparative Example 10, the bubbles of meringue disappeared and the volume of meringue was greatly decreased after one hour in Comparative Example 10 but the disappearance of bubbles of meringue was suppressed and a decrease in volume was hardly observed even after 1 hour in Example 6.

### (Preparation of Meringue-like Composition)

### <Example 7>

In a ball, 0.5% by weight of carrageenan sp-100 (manufactured by MSC CO., LTD.), 25% by weight of granulated sugar, 0.5% by weight of the foaming material of Production Example 1, and 74% by weight of water were put, mixed, and stirred until carrageenan was fully dissolved. This was whipped for 3 minutes at the medium speed by using a hand mixer, thereby preparing a meringue-like composition.

### <Comparative Example 11>

The same operation as in Example 7 was conducted except that a foaming material was not added in Example 7 as Comparative Example 11.

As a result of evaluation in Example 7 and Comparative Example 11, it was possible to prepare a meringue-like composition having fine foam texture in Example 7 but it was not possible to prepare a meringue-like composition since foam was not generated in Comparative Example 11.

### (Preparation of Sponge Cake)

### <Example 8>

Mixed were 60 g of egg yolk and 45 g of granulated sugar and mixed for 3 minutes by using a whipper (medium speed) until the whole mixture became white.

Next, 90 g of egg white to which 0.945 g (0.3% by weight with respect to the dough before baking) of the foaming material of Production Example 1 was added was stirred in another container for 1 minute by using a whipper (medium speed) while cooling the container with ice. Thereto, 15 g of granulated sugar was added, and the mixture was stirred for 45 seconds by using a whipper (medium speed). Again, 15 g of granulated sugar was added thereto, and the mixture was stirred for 45 seconds by using a whipper (medium speed) . Furthermore, 15 g of granulated sugar was added thereto, and the mixture was stirred for 45 seconds by using a whipper (medium speed), thereby preparing meringue.

To the egg yolk stirred material, 68 g of meringue was added, and the mixture was lightly mixed by using a spatula, and 75 g of a fine powder sieved in advance was added thereto and mixed together. The remaining meringue was put in this mixture, and the mixture was stirred for 1 minute by using a whipper (medium speed).

In a mold having a diameter of 15 cm, 250 g of the dough thus obtained was put and baked in an oven at 180°C for 25 minutes . After baking, the resultant was stored at -20°C for 6 days and thawed, the appearance, mouthfeel, and the like thereof were confirmed.

### <Comparative Example 12>

Comparative Example 12 was carried out in the same manner as in Example 8 except that a foaming material was not added in Example 8.

As a result of comparative evaluation between Example 8 and Comparative Example 12, the "kiln drop" that the volume decreased after baking occurred and the mouthfeel was heavy in Comparative Example 12 but kiln drop was suppressed and the mouthfeel was full and light in Example 8. In addition, when the surface of the sponge cake was compared, there were large bubble marks in Comparative Example 12 but there were few large bubble marks and the surface was clean in Example 8 . As described above, Example 8 was superior to Comparative Example 12 in both of the mouthfeel and the beauty of appearance.

### (Preparation of Marshmallow)

### <Example 9>

In a heat-resistant container, 50 g of milk, 45 g of sugar, 5 g of gelatin, and 1 g of blueberry powder were weighed, put, and mixed together, and the mixture was then heated for about 2 minutes in a range to completely dissolve the gelatin. In another container, 20 g of egg white and 0.25 g of the foaming material of Production Example 1 were weighed, put, and stirred for 30 seconds by using a hand mixer. Thereafter, 5 g of sugar was added thereto, and the mixture was stirred for 1. 5 minutes, thereby preparing rounded meringue. The solution heated in a range was added to the meringue little by little so as to draw a circle, and the whole was mixed together. This was poured into a container, the surface was arranged, and the resultant was then cooled and solidified in a refrigerator for 30 minutes or longer. The mouthfeel, taste, appearance, and the like of the marshmallow thus prepared were confirmed.

### <Comparative Example 13>

Comparative Example 13 was carried out in the same manner as in Example 9 except that a foaming material was not added in Example 9.

As a result of comparative evaluation between Example 9 and Comparative Example 13, the marshmallow of Example 9 had fine bubble texture, was smooth, and had favorable touch on the tongue and favorable melting in the mouth. In addition, the marshmallow of Example 9 had a beautiful appearance as well. On the other hand, the marshmallow of Comparative Example 13 had rough bubble texture, was inferior in the touch on the tongue and melting in the mouth, also, had a coarse surface, and was also inferior in the appearance as compared to Example 9.

### (Preparation of Marshmallow without Egg White)

### <Example 10>

Mixed together were, 60 g of sugar, 125 g of water, 0.5 g of vanilla essence, and 0.593 g (0.3% by weight) of the foaming material of Production Example 1, the mixture was heated and dissolved, and then 12.5 g of gelatin was added thereto and sufficiently dissolved. When the temperature of the solution decreased to 40°C, the solution was stirred and whipped for 4 minutes at the medium speed by using a hand mixer while being warmed in hot water at 40°C. The whipped solution was put in a transparent container and solidified in a refrigerator, thereby preparing marshmallow. The mouthfeel and appearance of the marshmallow thus prepared were confirmed.

### <Comparative Example 14>

Comparative Example 14 was carried out in the same manner as in Example 10 except that a foaming material was not added in Example 10.

As a result of comparative evaluation between Example 10 and Comparative Example 14, the texture of bubbles of the marshmallow was closely packed, the mouthfeel was firm, and melting in the mouth was favorable in Example 10. In addition, the stability of bubbles was favorable and the separation was not observed. On the other hand, the texture of bubbles was rough, the elasticity was weaker, and melting in the mouth was inferior in Comparative Example 14 as compared to those in Example 10. Furthermore, the stability of bubbles was poor and thus the separation was observed.

### (Foaming Property Enhancement · Bubble Stabilizing Effect in Beer-based Beverage)

### <Example 11>

Non-alcohol beer (manufactured by SUNTORY HOLDINGS LIMITED) was subjected to ultrasonication to remove carbonic acid. The degassed non-alcohol beer was dispensed into containers, and 0.01% by weight of the foaming material was added to one of them. This was put in a 50 ml colorimetric tube with stopper by 20 ml and vigorously stirred up and down for 10 seconds . The look of foam immediately after stirring and the look of foam after 10 minutes were confirmed.

### <Example 12>

Example 12 was carried out in the same manner as in Example 11 except that the amount of the foamingmaterial added was changed to 0.05% by weight in Example 11.

### <Example 13>

Example 13 was carried out in the same manner as in Example 11 except that the amount of the foaming material added was changed to 0.1% by weight in Example 11.

### <Comparative Example 15>

Comparative Example 15 was carried out in the same manner as in Example 11 except that a foaming material was not added in Example 11.

As a result of evaluation in Example 11, Example 12, Example 13, and Comparative Example 15, foam generated by stirring the non-alcohol beer increased as the amount of the foaming material added increased and more bubbles remained as the amount of the foaming material added was larger even in 10 minutes after stirring in Example 11, Example 12, and Example 13. On the other hand, the amount of foam was smaller in Comparative Example 15 as compared to Example 11, Example 12, and Example 13.

### (Preparation of Foamed Soy Sauce)

### <Example 14>

Mixed together were 10 g of soy sauce, 30 g of water, 0.06 g (0.15% by weight) of carrageenan sp-100 (manufactured by MSC CO., LTD.), and 0.08 g (0.2% by weight) of the foaming material of Production Example 1, and the mixture was dissolved. This solution was whipped for 1 minute at the medium speed by using a hand mixer. The foam thus generated was weighed by 20 g and put in a beaker, and the stability of foam was confirmed.

### <Comparative Example 16>

Comparative Example 16 was carried out in the same manner as in Example 14 except that a foaming material was not added in Example 14.

As a result of comparative evaluation between Example 14 and Comparative Example 16, the texture of bubbles was fine, the stability of bubbles was excellent, and the separation of liquid was not observed in Example 14. On the other hand, the texture of bubbles was rough, and the stability of bubbles was poor, and the separation of liquid occurred in Comparative Example 16 as compared to Example 14.

### Industrial Applicability

The foaming material of the present invention can be widely used in a bubble-containing food product such as meringue, cake, cream, marshmallow, beer, foamed beverages, and foamy seasonings, and the foaming material can contribute to the improvement in quality of the bubble-containing food product. In addition, the foaming material of the present invention can be used in bubble-containing products other than food products.

### Brief Description of Drawings

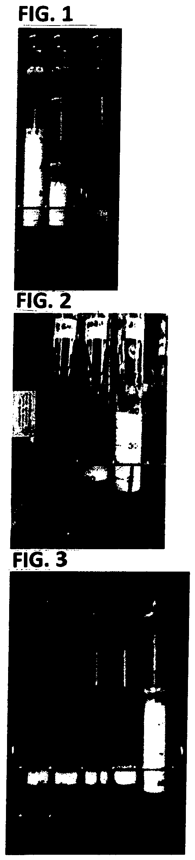

Fig. 1 is a photograph which illustrates the results on a foaming activity test 1 (Example 1, Comparative Example 1, and Comparative Example 2 from the left).
Fig. 2 is a photograph which illustrates the results on a foaming activity test 2 (Comparative Example 4, Comparative Example 3, and Example 2 from the left).
Fig. 3 is a photograph which illustrates the results on a foaming activity test 3 (Comparative Example 8, Comparative Example 7, Comparative Example 6, Comparative Example 5, and Example 3 from the left).

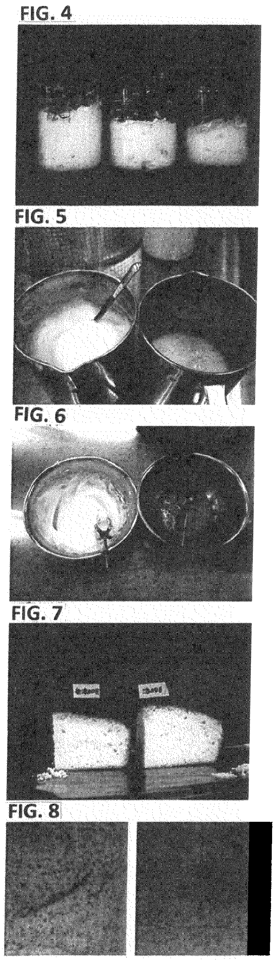

Fig. 4 is a photograph which illustrates the results on a meringue volume increase test (Example 5, Example 4, and Comparative Example 9 from the left).
Fig. 5 is a photograph which illustrates the results on a bubble stability test (Example 6 and Comparative Example 10 from the left) of whole egg meringue.
Fig. 6 is a photograph which illustrates the results on the preparation of a meringue composition (Example 7 and Comparative Example 11 from the left).
Fig. 7 is a photograph which illustrates the results on the swelling of sponge cake (Comparative Example 12 and Example 8 from the left).
Fig. 8 is a photograph which illustrates the results on the surface of sponge cake (Comparative Example 12 and Example 8 from the left).

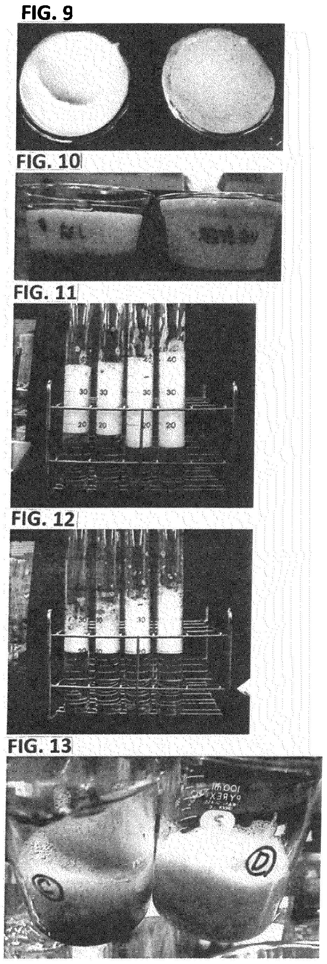

Fig. 9 is a photograph which illustrates the results on thepreparationof marshmallow (Example 9 and Comparative Example 13 from the left).
Fig. 10 is a photograph which illustrates the results on the preparation of marshmallow without egg white (Comparative Example 14 and Example 10 from the left).
Fig. 11 is a photograph which illustrates the results immediately after stirring in a test on the foaming property enhancement · bubble stabilizing effect in a beer-based beverage (Comparative Example 15, Example 11, Example 12, and Example 13 from the left).
Fig. 12 is a photograph which illustrates the results in 10 minutes after stirring in a test on the foaming property enhancement · bubble stabilizing effect in a beer-based beverage (Comparative Example 15, Example 11, Example 12, and Example 13 from the left).
Fig. 13 is a photograph which illustrates the results on the preparation of foamed soy sauce (Comparative Example 16 and Example 14 from the left).

## Claims

1. A foaming material comprising a yeast extract having a protein content of 35% by weight or more per solid content and a dietary fiber content of 30% by weight or more per solid content.

2. A foaming agent comprising the foaming material according to claim 1.

3. A bubble-containing food product comprising the foaming material according to claim 1 at from 0.001% to 1% by weight.

4. A method for producing the foaming material according to claim 1, wherein a yeast extract is extracted from a yeast cell residue.

5. A method for producing the foaming material according to claim 1, the method comprising:
a step of suspending a yeast cell residue in water;
a step of adjusting a pH of a yeast cell suspension to an acidic side; and
a step of heating a yeast cell suspension.

6. A method for promoting foaming or stabilizing bubbles of a composition to be foamed, wherein the foaming material according to claim 1 is contained in the composition at from 0.001% to 1% by weight.
